# EUROPEAN PATENT SPECIFICATION

(11) **EP 1 321 756 B1**
(45) Date of publication and mention of the grant of the patent: **14.02.2018**
(21) Application number: 01960738.1
(22) Date of filing: 27.07.2001
(51) Int. Cl.: G01N 1/30, G01N 1/31, B01F 11/00, B01F 15/00, B01F 7/16, G01N 35/00

(54) **METHOD FOR PREPARING ORGANIC OR INORGANIC SAMPLES FOR CLINICAL OR SCIENTIFIC EXAMINATION AND MACHINE FOR IMPLEMENTING SAID METHOD**
VERFAHREN ZUR PRÄPARATION ORGANISCHER ODER ANORGANISCHER PROBEN ZUR KLINISCHEN ODER WISSENSCHAFTLICHEN UNTERSUCHUNG UND MASCHINE ZUR IMPLEMENTIERUNG DES VERFAHRENS
PROCEDE DE PREPARATION D'ECHANTILLONS ORGANIQUES OU INORGANIQUES DESTINES A UN EXAMEN CLINIQUE OU SCIENTIFIQUE ET MACHINE PERMETTANT DE METTRE EN OEUVRE LEDIT PROCEDE

(30) Priority: 04.08.2000 ES 200002111
(43) Date of publication of application: 25.06.2003
(73) Proprietor: HLT, GmbH, 4500 Solothurn (CH)
(72) Inventor: HESS, Ursula, 69181 Leimen (DE); RUIZ ROBLES, Francisco, E-43700 El Vendrell-Tarragona (ES)
(74) Representative: Canela Giménez, Teresa
(86) International application number: PCT/ES2001/000302
(87) International publication number: WO 2002/014834

(56) References cited:
- US-A- 2 341 197
- US-A- 2 845 045
- US-A- 3 762 362
- US-A- 3 809 008
- US-A- 4 196 231

## Description

The object of the present Patent of Invention is to provide a procedure for the preparation of organic or inorganic samples for the clinic or scientific examination thereof and machine for performing the said procedure.

Heretofore procedures for the preparation of samples such as, organic tissues for the further clinic examination and study thereof, have proved to have different shortcomings that hinder obtaining optimal quality preparations for doctors to perform the examination and study thereof.

One of above mentioned shortcomings is the fact that the reactive liquids received within the beakers wherein organic tissue samples are immersed become contaminated with the substances coming from the processed samples (for instance, from the water in the dehydratation processes of the sample) and as a result they form superposed stratified layers and thus the organic matter sample that is being processed may not be uniformly processed by the reactive liquid.

In order to avoid this disadvantage manufacturers of this sector have been forced to include in the process a phase of up and down movements of the basket within the reactive liquid.

However, although with the above additional phase a better impregnation of the organic tissue samples is obtained, contact with the liquid is still precarious for the liquid is still not wholly mixed in an uniform way.

A further problem found in known procedures and machines is the fact that as the different beakers containing reactive liquids therein are arranged on a circular or lineal turntable, whereon the organic tissue sample undergoes successive processes with different reactive liquids, the basket is suspended for a predetermined time interval above the level of liquid contained within the beaker wherein it has been immersed in order to obtain gravity drainage of the liquid remaining in the basket or baskets. This time interval is substantially long for the gravity drainage to be effective and thus keeping the reactive liquid from the previous phase beaker from flowing into the beaker of the following phase while the immersion thereof is occurring.

Naturally, the above drainage time interval is essential for the treatment process of the organic matter until the completion thereof, taking into consideration that the process is performed in successively arranged stations. The sum of each and every phase of sample drainage in each station represents a considerable waste of time.
Further, the result obtained is not a thorough drainage for in practice there always remains some extra liquid. This results in the contamination of the reagents caused by the mixture thereof with reagents from other beakers, which reduces the effective life thereof and hence it makes the process more costly.
Also, account is to be taken of the fact that it is difficult to control the drainage time interval needed in each station, since it will depend upon the physical characteristics of the liquid to be drained, for instance its density, viscosity, etc.
This increases reagent contamination and drainage time intervals.

US 3,809,008 (TAKAHASHI) represents relevant prior arts

The object of this invention has been developed in order to avoid all the above disadvantages. It enables achieving an optimal final result as far as the processing of organic matter is concerned as well as a major reduction of the overall time interval for the basket or baskets drainage phase and, consequently, for the organic matter introduced therein. Furthermore, reagent contamination is substantially reduced which results in a less costly process.

For an appropriate interpretation, below is described an embodiment by way of an non-limiting example of the present invention and the accompanying 6 sheets of drawings in which:
Figure 1 diagrammatically illustrates the stirring phase of the sample through both self-rotating and up and down movements.
Figure 2 diagrammatically illustrates the stirring phase of the sample within the processing liquid through reciprocating self-rotating movements of the basket.
Figure 3 diagrammatically illustrates the centrifugal phase.

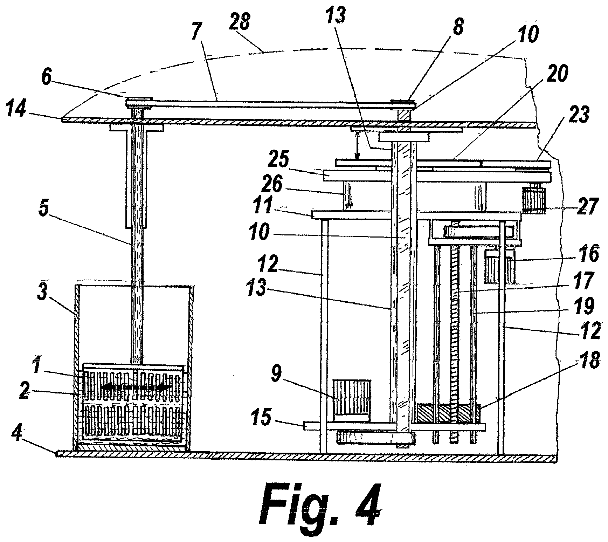

Figure 4 is an elevated and sectional view of the machine object of the invention having the basket introduced within the beaker and inside the reactive liquid.

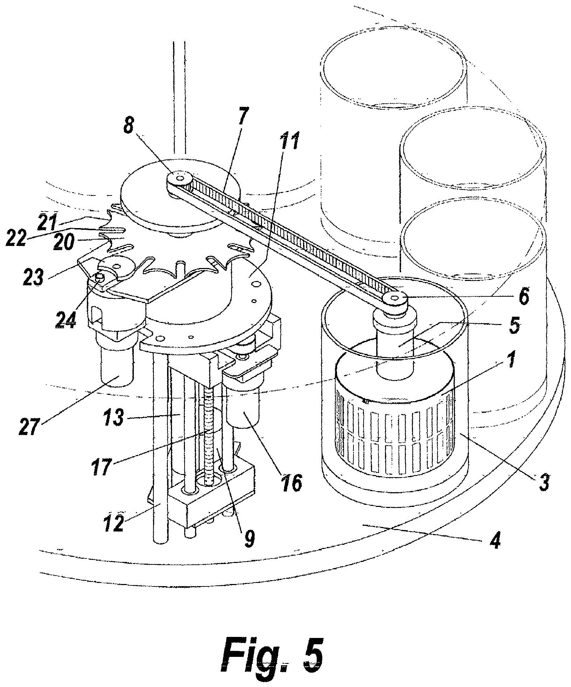

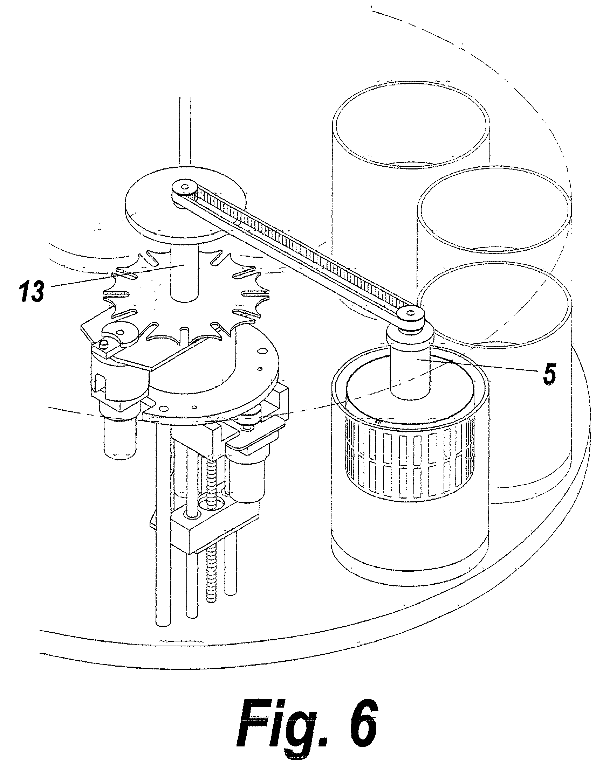

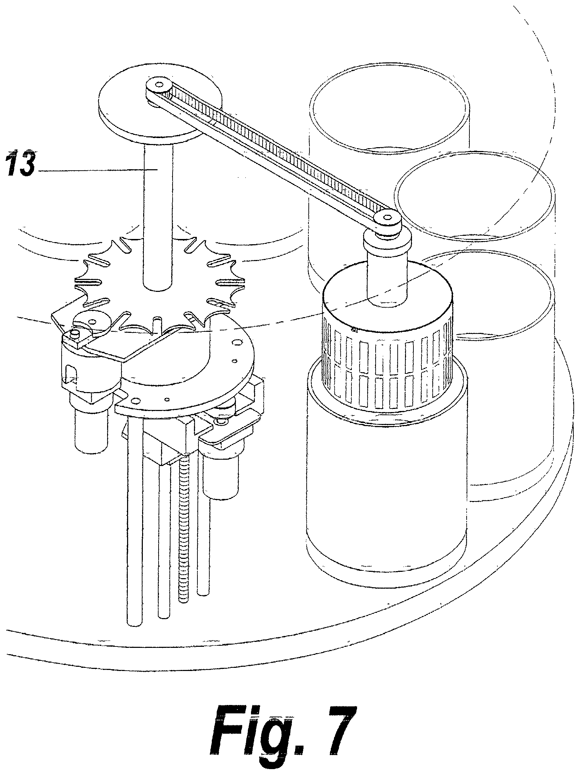

Figures 5, 6 and 7 are respective perspective views of the machine object of the invention in different phases of the process.
Figure 8 is a cut partial view of the movable platform, the baskets, the Geneva cross, the coupling bolt and the disk cam during the blocking phase of the rotation of the Geneva cross.
Figure 9 is a partial cut view of the Geneva cross assembly, the disk cam and the coupling bolt after the coupling action has taken place.

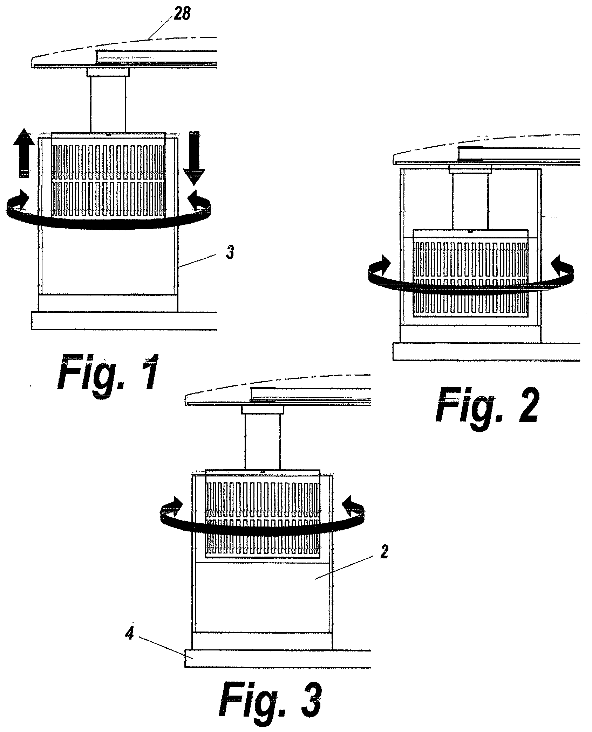

The invention comprises the preparation process of organic tissue samples made up of the already known phases of immersion of the basket (1) and the organic tissue samples contained therein into the composition consisting of processing liquid (2) contained in the corresponding beaker (3) out of the several beakers arranged in concentric relation to the turntable (4) and the vertical raising and lowering of the basket clear of the level of processing liquid for the gravity drainage and the introduction thereof within the adjoining beaker containing another processing liquid. Additional new phases are the vertical and rotary agitating action of the basket within the liquid so as to create turbulences (figures 1 and 2) and hence prevent the stratification of the layers of the different components found in the liquid.

A further phase of the procedure of the invention is the centrifugation of the basket carrying the organic matter (figure 3) before being placed inside the beaker of the next phase containing another reactive liquid.

The new phase of vertical and rotary agitating action of the basket inside the reactive liquid takes place through the clockwise rotary self-rotating movement thereof, immediately followed by another rotary movement in the opposite direction. Thereafter the basket raising phase begins, which, at user's will, can take place without the basket stopping self-rotating, until the basket is completely or partially located clear of the level of liquid and is further immersed therein, eventually without stopping rotating, which is followed by a further movement comprising reciprocating self-rotating rotations of the basket within the liquid.

Turbulences are hence created and as a result the stratification of the liquid immersed within the beaker is prevented, which gives as a result an optimal and uniform sample processing in each workstation.

In order to obtain the reciprocating rotary movement of the movable basket (1) carrying the organic matter to be processed within the liquid mixture (2) contained in the beaker (3) from the different beakers disposed in an annular arrangement around the turntable (4), there is provided a coaxial shaft (5) that is attached to the basket, having the upper end of the said coaxial shaft (5) a pulley that is engaged to the end of a trapezial endless transmission belt (7), being the opposite end thereof also taut and connected to a further pulley (8) associated with the end of the prolongation (10) of the rotor of the step-by-step motor (9) which is provided with several speeds.

A support platform (11) supported by respective legs (12) on the base of the turntable (4) bears the coaxial shaft (13) that is coaxially inserted therein through suitable grooves. Said coaxial shaft (13) for raising and lowering the platform (14) also coaxially carries within the rotary shaft (10) which has rotary pulley (8) at the upper end thereof. The shaft (13) is supported by the platform (15) that supports the step-by-step rotary motor or main motor (9) and said platform (15) is linked to platform (11) and has free relative up and down movements relative thereto. The shaft (13) supports the platform (14) which cooperates with the up and down as well as the rotary movements of the shaft (13).

The raising and lowering of the platform (15), the shafts (13 and 10), the platform (14) and the elements connected therewith is accomplished thorough the rotation of the first additional motor (16) associated with a vertical screw (17), being this rotation imparted by means such as, respective pulleys associated with the rotor of the motor (16) and with the screw (17), and joined by a trapezial endless belt. The rotation of the screw (17) raises and lowers a support-base (18), like a lineal car, associated with the support platform (15) of the motor (9) and while the raising and the lowering of the support platform (15) occurs, shafts (10 and 13) as well as platform (14) and the other associated components are also raised or lowered. By means of microswitches disposed at different heights on a support, not shown, in parallel relation to the column (19), said raising and lowering is limited to the desired height of the basket, depending on which phase is taking place, whether stirring, centrifugation or change of station.
The vertical shaft (13) coaxially carries within the shaft (10) of prolongation of the rotor of the motor (9). By means suitable grooves the shaft is capable of self-rotating relative to the other, being thus the rotation of the vertical shaft (13) independent of the shaft (10) that is located therein.
Below platform (14) and above platform (25) and through a suitable supporting structure is disposed a rotation translating motor (27) on which upper end of the rotor shaft rests the assembly comprised by a disc cam (23) and a coupling bolt (24) which rotate associated with the rotary shaft of said motor (27). In the same plane as said disk cam and coupled to the shaft (13) is a Geneva cross (20) having multiple radial arms (21) and slits (22) between the arms thereof (21).
The rotation of the Geneva cross (20) is associated with the rotation of the shaft (13).
The rotation of the step-by-step motor (9) causes the rotation of the pulley (8) in a movement that is independent of the rotation of the vertical motor (16). It is said main step-by-step motor (9) which imparts, during the centrifugal phase and when the basket (1) is above the level of the liquid (2) of the beaker (3) wherein it has been immersed, rotation at a great speed to the basket, reciprocatingly and in both directions, which results in the centrifugation thereof and the organic matter contained therein.

Upon completion of the centrifugation phase the step-by-step main motor (9) stops, starting hereafter the phase of the introduction of the basket (1) in the adjoining beaker containing fresh processing liquid placed by the rotation of the motor (27) transferred to the Geneva cross mechanism (20) and by the rotary shaft (13) associated therewith, which advance the basket a distance corresponding to the new processing station of the organic tissue placed on the turntable (4).

The Geneva cross (20) in conjunction with the cam (23) enables an intermittent jogging rotary movement of the platform (14) carrying the shaft support (5) that supports and rotates the basket (1), so that the basket is transferred from one beaker to the next on the turntable (4), not within the beakers.

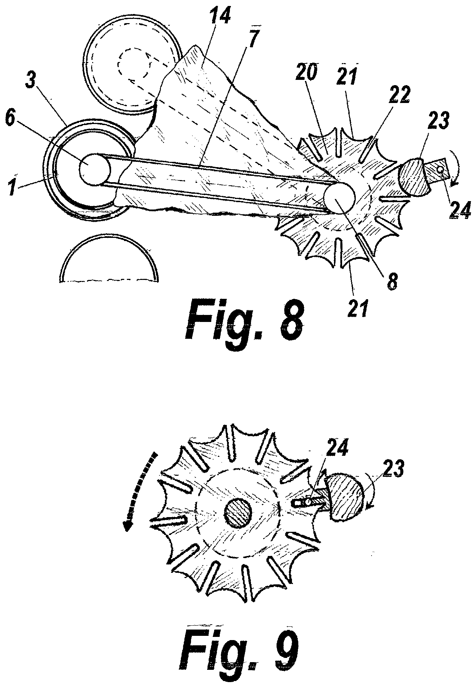

The cam (23) is disk-shaped so that by means of one single self-rotating rotation, it moves into and couples in the cavities of the semicircular indentations of the Geneva cross (20) radial arms (21), so that the rotary movement of the shaft (13), the platform (14) and the basket (1) ceases owing to the slowing inertia of the Geneva cross and subsequent stop thereof due to the blocking of the disk cam on the semicircular indentations of the Geneva cross (20) arms (21) (figure 8). This exactly coincides with the moment when the basket is within the beaker (3) and prevents the basket (1) from bumping into the beaker (3) walls. The continuation of the rotation of the additional motor (27) responsible for the rotation of disk cam (23) couples the coupling bolt (24) into the slits (22) (figure 9) separating the Geneva cross (21) arms (20) and causes the rotation of the Geneva cross (20), the shaft (13) and the platform, which are associated therewith, enabling the advance of the basket (1) above the beakers of the turntable (4) so that the translational movement of the basket (1) to the next station in the process can be effected.

The rotary translational motor (27) of the basket (1), the motor for the up and down movements (16), and the intermittent rotary motor (9), either clockwise or anticlockwise, are connected to the CPU of the logic card placed in a suitable location in the machine of the invention, so that the movable actuating elements are mutually time synchronized by the CPU program of the logic card, controllable by the user himself of the machine according to the organic tissue to be prepared, the amount thereof, the quality and the quantity of the reactive compositions contained in the beakers, etc.

Covering lid (28) of the machine is supported and fixed to the edge of the platform (14), cooperating with the up and down movements of the actuating shaft (13).

If necessary, several baskets (1) can simultaneously be used, with the ensuing improved performance of the machine, for instance by placing as many shafts (5) as baskets are to be simultaneously processed and increasing the range of action of the trapezial transmission belt so as to include the pulleys (6) corresponding to each shaft (5) without substantially altering the present invention.

## Claims

1. Procedure for the preparation of organic or inorganic samples for the clinical or scientific examination thereof, of the type comprising the impregnation of a sample disposed in a basket, by successively immersing the basket in beakers containing a liquid composition for different treatments, the beakers being circumferentially spaced on a turntable, the procedure comprising the successive steps of:
- starting from said basket above the level of liquid, immersing said basket in a down movement into said composition,
- raising the basket in an up movement above the level of liquid,
- following a sample drainage phase, transferring the basket into the next beaker along with the sample;
**characterized in that:**
(i) The procedure includes an agitation phase of a stratified composition of the processing liquid within the corresponding beaker, comprising:
- agitating said basket inside the processing liquid through a clockwise rotary self-rotating movement immediately followed by another movement in the opposite direction;
- thereafter starting an ascent phase of the basket, without ceasing the self-rotating rotation thereof, thereby raising the basket until it is completely or partially located above the level of liquid,
- further immersing the basket and performing another movement of reciprocating basket self-rotating rotations within the liquid;
(ii) The sample draining phase includes a centrifugation phase of the basket.

2. Machine for performing the procedure according to claim 1, of the type having circumferentially spaced beakers (3) on a turntable (4), a plurality of beakers (3) for containing different processing liquid compositions (2), and a basket (1) for containing a sample; said machine comprising
- a support (11) for a screw assembly (17) associated with an electric motor (16) that actuates a raising and lowering rotary shaft (13), said support platform (11) resting on the base of the turntable (4) by means of respective legs (12;
- a stationary spatial truss (26) and another platform (25) affixed on the upper portion of said support platform (11), said other platform (25) supporting a translational motor (27) responsible for the transfer of said basket (1) from one beaker to the next;
- a main rotary shaft (10), being coaxially placed inside said raising and lowering rotary shaft (13), and a rolling arrangement which allows rotation of the main rotary shaft (10) independently of the rotation of the raising and lowering rotary shaft (13);
- said raising and lowering rotary shaft (13) receiving the action of said translational motor (27) by means of a cam (23) and a coupling bolt (24) assembly coupled on the upper end of the raising and lowering rotary shaft (13);
- a lower horizontal platform (15) that supports a step-by-step rotary motor (9) and said raising and lowering rotary shaft (13), said lower horizontal platform (15) being passed through by the main rotary shaft (10) that receives the rotary movements from said step-by-step rotary motor (9);
- a basket rotary shaft (5) fixed to said basket (1), the upper end of said basket rotary shaft (5) being coupled to the upper end of the main rotary shaft (10) by a further rolling arrangement;
- an upper rotary platform (14) supported by the raising and lowering rotary shaft (13), said upper rotary platform (14) coupled to said basket rotary shaft (5) near the upper end thereof;
- a covering lid (28) fixed to the upper platform (14) and participating in the movements of said platform (14) .

3. Machine, according to claim 2, wherein the stop, lifting and lowering height resulting from the movements of the screw (17) is obtained by means of sensors disposed, at will, along the path thereof.

4. Machine, according to claims 2 and 3, wherein the stop and release of the rotary action of the motors are synchronized with each other by a program written in the CPU of a logic card situated at a suitable location in the machine that is part of the machine assembly.

5. Machine, according to claims 2 to 4, wherein the transmission of the step-by-step motor rotation actuating the basket (1) is accomplished through a trapezial belt (7) associated to respective pulleys (6,8) located at the upper ends of the basket rotary shaft (5) and main rotary shaft (10).

6. Machine, according to claims 2 to 5, wherein the lower end of the main rotary shaft (10) is inserted through a hole in the lower horizontal platform (15)and the projecting portion thereof is coupled with the trapezial belt which imparts the rotary movements from the step-by-step motor (9); the lower end of said rotary shaft (10).

7. Machine, according to claim 5 or to claims 5 and 6, wherein, when necessary, more than one basket (1) may be used, each one having the basket rotary shaft (5) thereof inserted in the platform (14) and the respective pulleys (6) thereof linked by the trapezial belt (7) to the pulley (8) of the main rotary shaft (10).

8. Machine, according to claims 2 to 7, wherein translational movements of the basket (1) to be received by the next beaker are accomplished through the transmission of said translational motor rotation movements to said raising and lowering rotary shaft (13) that rotates said platform (14), thanks to rotary movement of said coupling bolt (24) and said cam (23), the cam having disk-shaped edges, in conjunction with a Geneva cross (20) having radial arms (21) with concave ends, separated by slots (22) forming said arms, said Geneva cross (20) being located in the same plane as said cam (23) and being coupled to said raising and lowering rotary shaft (13), the rotation of the raising and lowering rotary shaft (13) being associated with the rotation of the Geneva cross (20).

## Patentansprüche

1. Verfahren zur Vorbereitung von organischen oder anorganischen Proben zwecks klinischer oder wissenschaftlicher Untersuchung mit Imprägnierung einer abweichenden Probe in einem Korb, wobei der Korb in ein Becherglas mit flüssigen Zusammensetzungen für verschiedene Behandlungen eingetaucht wird. Die Bechergläser sind in Richtung des Umfangs auf einer Drehplatte angeordnet. Das Verfahren besteht aus aufeinanderfolgenden Phasen:
- der genannte Korb befindet sich oberhalb des Flüssigkeitsstands und wird mit einer Abwärtsbewegung in die erwähnte Zusammensetzung eingetaucht,
- der Korb wird mit einer Aufwärtsbewegung über den Flüssigkeitsstand gehoben,
- anschließend folgt eine Entwässerungsphase der Probe, bei der der Korb mit der Probe in das folgende Becherglas geführt wird;
**dadurch gekennzeichnet:**
(i) Das Verfahren enthält eine Schüttelphase der stratifizierten Zusammensetzung der Verfahrensflüssigkeit in dem entsprechenden Becherglas, d.h.:
- dieser Korb wird in der Verfahrensflüssigkeit mit einer selbst rotierenden Bewegung im Uhrzeigersinn und unmittelbar anschließend in entgegengesetzter Richtung geschüttelt;
- daraufhin beginnt eine aufsteigende Phase des Korbes, ohne dass dabei die selbst rotierende Bewegung unterbrochen wird. Der Korb wird auf diese Weise gehoben bis er sich komplett oder teilweise oberhalb des Flüssigkeitspegels befindet,
- der Korb wird untergetaucht und eine weitere, selbst rotierende Wechselbewegung des Korbs in der Flüssigkeit ausgeführt;
(ii) Die Entwässerungsphase der Proben schließt eine Zentrifugierung des Korbes ein.

2. Die Maschine, von der das Verfahren gemäß des Anspruchs 1 ausgeführt wird, mit in Richtung des Umfangs auf einer Drehplatte (4) angeordneten Bechergläsern (3) mit verschiedenen Zusammensetzungen von Flüssigkeiten für das Verfahren (2) und ein Korb (1) mit einer Probe; zu der genannten Maschine gehören folgende Teile:
- eine Halterung (11) für die Schraubengruppe (17), verbunden mit einem E-Motor (16), von dem eine hoch- und runterfahrende Drehachse angetrieben wird (13), und die genannte Halterungsplattform (11), die mit ihren entsprechenden Füßen (12) auf der Drehplatte (4) angeordnet ist;
- ein fest angebrachter Distanzhalter (26) und eine weitere Plattform (25), der Distanzhalter ist an dem oberen Teil dieser Halterungsplattform (11) angebracht. Diese andere Plattforma (25) trägt einen Fahrmotor (27), von dem der Korb (1) von einem Becherglas in das nächste geführt wird;
- eine Hauptdrehachse (10), die koaxial in der genannten hoch- und runterfahrenden Drehachse (13) angeordnet ist und Anordnung von Walzen, von denen die Rotation der Hauptdrehachse (10) vorgenommen wird, unabhängig der Rotation der hoch- und runterfahrenden Drehachse (13);
- die hoch- und runterfahrende Drehachse (13) wird von dem genannten Fahrmotor (27) angetrieben von einem Nocken (23) und einer Gruppe Kopplungsholmen (24), angekoppelt an das obere Ende der hoch- und runterfahrenden Drehachse (13);
- eine untere horizontal angeordnete Plattform (15) für den Drehschrittmotor (9), die hoch- und runterfahrende Drehachse (13) und die untere horizontale Plattform (15) werden von der Hauptdrehachse (10) durchlaufen, die ihre Drehbewegungen von dem angegebenen Drehschrittmotor (9) erhält;
- eine an diesem Korb (1) befestigte Drehachse (5), das obere Ende dieser Korbdrehachse (5) ist am oberen Ende der Hauptdrehachse (10) durch Anordnung weiterer Walzen angekoppelt;
- eine obere Drehplattform (14), getragen von der hoch- und runterfahrenden Achse (13), diese obere Drehplattform (14) ist an die Drehachse des Korbes (5) nahe des oberen Endes angekoppelt;
- eine Abdeckung (28) mit Befestigung an der oberen Plattform (14), von der die Bewegungen dieser Plattform (14) mit ausgeführt werden.

3. Die Maschine gemäß Anspruch 2, bei der sich Stopp, Länge der Auf- und Abfahrt aus der Schraubenbewegung und den Wunschgemäß (17) auf der Weglänge angeordneten Fühlern ergeben.

4. Die Maschine gemäß Anspruch 2 und 3, bei der Stopp und Entsperren der Drehbewegung der Motoren mit einem Programm in der CPU auf einer Logik-Platine synchronisiert sind, die an einer geeigneten Stelle der Maschine befindet und Teil der Maschineneinheit ist.

5. Die Maschine gemäß Anspruch 2 bis 4, bei der die Übertragung der Rotation des Schrittmotors mit Aktivierung des Korbes (1) mit einem Trapezband (7) erfolgt, das mit den entsprechenden Riemenscheiben (6, 8) verbunden ist, die an den oberen Enden der Drehachse des Korbes (5) und der Hauptdrehachse (10) befestigt sind.

6. Die Maschine gemäß Anspruch 2 bis 5, bei dem das untere Ende der Hauptdrehachse (10) durch eine Öffnung in die untere, horizontale Plattform (15) geführt wird, wobei der herausragende Teil mit dem Trapezband verbunden wird, von dem die Drehbewegungen mit einem Schrittmotor (9) ausgeführt werden.

7. Die Maschine gemäß Anspruch 5 oder den Ansprüchen 5 und 6, mit denen bei Bedarf mehr als ein Korb (1) benutzt werden kann, wobei jeder Korb über eine Drehachse (5), eingeführt in die Plattform (14) und seine entsprechenden Riemenscheiben (6) verfügt die mit Trapezband (7) an der Riemenscheibe (8) der Hauptdrehachse (10) verbunden sind.

8. Die Maschine gemäß Anspruch 5 bis 7, mit denen die Verfahrbewegungen des Korbes (1), die sich seitlich des folgenden Hecherglases (1) ergeben müssen, sie werden durch die Übertragung dieser Drehbewegungen des Fahrmotor auf die genannte hoch- und runterfahrenden Drehachse (13) erreicht, dank der Rotation der genannten Kopplungsholme (24) und des Nocken (23). Die Nocke hat scheibenförmige Ränder und ein vierstrahliges Sternrad (20) mit radialen Schenkeln (21) und konkaven Enden, getrennt durch Schlitze (22), die diese Schenkel bilden, die sich mit dem Sternrad auf derselben Ebene wie die Nocke (23) befinden und an die hoch- und runterfahrende Drehachse (13) angekoppelt sind. Die Rotation der hoch- und runterfahrenden Achse ist an die Rotation des Sternrades (20) gebunden.

## Revendications

1. Procédure de préparation d'échantillons organiques ou inorganiques en vue de leur examen clinique ou scientifique, du type comprenant l'imprégnation d'un échantillon jeté dans un panier, par immersion réussie du panier dans des béchers contenant une composition liquide pour différents traitements. Les béchers sont séparés en circonférence sur une table tournante. Le procédé comprend les étapes successives suivantes:
- commencer à partir du panier cité au-dessus du niveau du liquide et le plonger dans la composition en effectuant un mouvement descendant,
- relever le panier au-dessus du niveau du liquide en effectuant un mouvement ascendant,
- ensuite, il y a une phase de drainage de l'échantillon, qui transfère le panier dans le bêcher suivant avec l'échantillon;
**caractérisée en ce que:**
(i) Le procédé comprend une phase d'agitation d'une composition stratifiée du liquide de traitement dans le bécher correspondant, comprenant:
- ledit panier est agité dans le liquide de traitement par un mouvement de rotation automatique dans le sens des aiguilles d'une montre suivi immédiatement d'un autre mouvement dans le sens inverse;
- une phase ascendante du panier est ensuite amorcée, sans arrêter la rotation de rotation automatique, soulevant ainsi le panier jusqu'à ce qu'il soit complètement ou partiellement au-dessus du niveau du liquide,
- le panier est plongé plus profondément et un autre mouvement réciproque du panier est effectué avec des rotations automatiques dans le liquide;
(ii) La phase de drainage des échantillons comprend une phase de centrifugation du panier.

2. La machine qui exécute la procédure selon la revendication 1, du type comprenant des béchers séparés en circonférence (3) sur une table rotative (4), une pluralité de béchers (3) contenant différentes compositions de liquides de traitement (2) et un panier (1) contenant un échantillon, ladite machine comprend:
- un support (11) pour l'ensemble vis (17), associé à un moteur électrique (16) qui actionne un axe de rotation montant et descendant (13), ladite plateforme de support (11) reposant sur la base d'une table tournante (4) au moyen de ses pieds respectifs (12);
- une entretoise fixe (26) et une autre plateforme (25), fixée sur la partie supérieure de la plateforme de support (11). L'autre plateforme (25) supporte un moteur de translation (27), qui est chargé de transférer ledit panier (1) d'un bêcher à l'autre;
- un axe de rotation principal (10), qui est placé coaxialement à l'intérieur dudit axe de rotation montant et descendant (13), et des rouleaux disposés de telle manière qu'ils permettent la rotation de l'axe de rotation principal (10), indépendamment de la rotation de l'axe de rotation montant et descendant (13);
- ledit axe de rotation, montant et descendant (13), reçoit l'action dudit moteur de translation (27) au moyen d'une came (23) et d'une tige d'accouplement (24) reliée à l'extrémité supérieure de l'axe de rotation montant et descendant (13);
- une plateforme horizontale inférieure (15) qui supporte le moteur rotatif pas à pas (9) . Ledit axe de rotation montant et descendant (13) et la plateforme horizontale inférieure (15) sont traversés par l'axe de rotation principal (10) qui reçoit les mouvements de rotation dudit moteur rotatif pas à pas (9);
- un axe de rotation du panier (5) fixé audit panier (1), dont l'extrémité supérieure dudit axe de rotation du panier est (5) reliée à l'extrémité supérieure de l'axe de rotation principal (10) par une autre disposition des rouleaux;
- une plateforme rotative supérieure (14), supportée par l'axe de rotation montant et descendant (13), ladite plateforme rotative supérieure (14) étant reliée à l'axe de rotation dudit panier (5) à proximité de l'extrémité supérieure;
- un couvercle (28) fixé à la plateforme supérieure (14) qui est engagé dans les mouvements de ladite plateforme (14) .

3. La machine, selon la revendication 2, dans laquelle l'arrêt, la hauteur de montée et de descente résultant des mouvements de vis (17) sont obtenus au moyen de capteurs disposés, à volonté, le long de sa trajectoire.

4. La machine, selon les revendications 2 et 3, dans laquelle l'arrêt et le déverrouillage de l'action rotative des moteurs sont synchronisés par un programme écrit sur l'unité centrale de traitement d'une carte logique située à un endroit approprié de la machine faisant partie de l'ensemble de la machine.

5. La machine, selon les revendications 2 et 4, dans laquelle la transmission de la rotation du moteur pas à pas activant le panier (1) est réalisée au moyen d'une courroie trapézoïdale (7) associée aux poulies respectives (6, 8) situées aux extrémités supérieures de l'axe de rotation du panier (5) et de l'axe de rotation principal (10).

6. La machine, selon les revendications 2 et 5, dans laquelle l'extrémité inférieure de l'axe de rotation principal (10) est insérée par un orifice dans la plateforme horizontale inférieure (15) et sa partie saillante est reliée à la courroie trapézoïdale exerçant les mouvements de rotation du moteur pas à pas (9).

7. La machine, selon la revendication 5 ou les revendications 5 et 6, dans laquelle, le cas échéant, il est possible d'utiliser plus d'un panier (1), dont l'axe de rotation de chaque panier (5) est inséré dans la plateforme (14) et ses poulies respectives (6) sont reliées par la courroie trapézoïdale (7) à la poulie (8) de l'axe de rotation principal (10).

8. La machine, selon les revendications 2 à 7, dans laquelle les mouvements de translation du panier (1) devant être transmis à côté du bécher suivant (1) sont réalisés par la transmission desdits mouvements de rotation du moteur de translation audit axe de rotation descendant et montant (13) qui fait tourner la plateforme (14), grâce au mouvement de rotation de la dite tige d'assemblage (24) et de ladite came (23). La came a des bords en forme de disque, ainsi qu'une croix maltaise (20) avec des bras radiaux (21) et des extrémités concaves, séparées par des rainures (22), qui forment lesdits bras. Ladite croix maltaise se trouve dans le même plan que la came (23) et est fixée à l'axe de rotation montant et descendant (13). La rotation de l'axe de rotation montant et descendant est associée à la rotation de la croix maltaise (20).
